# EUROPEAN PATENT APPLICATION

(11) **EP 4 810 275 A1**
(43) Date of publication of application: **23.09.2026**
(21) Application number: 26157018.8
(22) Date of filing: 06.02.2026
(51) Int. Cl.: B60G 17/015

(54) **PREDICTIVE SUSPENSION CONTROL IN WORK VEHICLES**

(30) Priority: 20.03.2025 US 202563775030 P; 13.01.2026 US 202619447232
(71) Applicant: Deere & Company, Moline, IL 61265 (US); Iowa State University Research Foundation, Inc, Ames, IA 50011 (US)
(72) Inventor: M COOK, Jeffrey, Jesup (US); DRIEST, Marco, Ames (US); HUERTA-MUSIL, Joel, Ames (US); J ADAMS, Bailey, Ames (US)
(74) Representative: Reddie & Grose LLP

(57) **Abstract**

Systems, apparatus, articles of manufacture, and methods are disclosed for predictive suspension control in work vehicles. An example vehicle includes a chassis, a damper, a sensor, and programmable circuitry that is to execute machine-readable instructions to predict an event, the event to cause a change in at least one of motion or orientation of the chassis; determine a damping force to be applied by the damper based on the event; and cause the damper to apply the damping force to the chassis.

## Description

### RELATED APPLICATION

This patent claims the benefit of U.S. Provisional Patent Application No. 63/775,030, which was filed on March 20, 2025. U.S. Provisional Patent Application No. 63/775,030 is hereby incorporated herein by reference in its entirety. Priority to U.S. Provisional Patent Application No. 63/775,030 is hereby claimed.

### FIELD OF THE DISCLOSURE

This disclosure relates generally to work vehicles and, more particularly, to predictive suspension control in work vehicles.

### BACKGROUND

Suspension systems for work vehicles are passive in nature and are designed to level out the chassis around a nominal height based on a vehicle weight.

### SUMMARY

Systems, apparatus, articles of manufacture, and methods are disclosed for predictive suspension control in work vehicles. An example vehicle includes a chassis; a damper; a sensor; machine-readable instructions; and programmable circuitry configured to execute the machine-readable instructions to: predict an event, the event to cause a change in at least one of motion or orientation of the chassis; determine a damping force to be applied by the damper based on the event; and cause the damper to apply the damping force to the chassis.

In one example, the programmable circuitry is to execute the machine-readable instructions to predict the event based on at least one of data gathered by or data generated by the sensor.

In another example, the programmable circuitry is to execute the machine-readable instructions to predict the event based on topography information.

In another example, the topography information is based on a map.

In another example, the event is a movement of a front of the chassis, and the damper is positioned at a rear of the chassis.

In another example, the damper is a first damper, the damping force is a first damping force, the vehicle further including a second damper, and the programmable circuitry is to execute the machine-readable instructions to: determine a second damping force to be applied by the second damper based on the event; and cause the second damper to apply the second damping force to chassis.

In another example, the second damping force applied independent of the first damping force.

In another example, the first damper is positioned at a front of the vehicle and the second damper is positioned at a rear of the vehicle.

In another example, the sensor includes a camera, and the event includes at least one of an obstacle or a terrain feature.

In another example, the vehicle includes a tank with a volume of a liquid, and the sensor includes a liquid level sensor, and the event includes a sloshing of the volume of liquid.

In another example, the vehicle includes a boom, and the sensor is to detect a position of the boom, and the event includes the position of the boom.

In another example, the vehicle includes an actuator for steering, and the sensor is to detect input of the actuator for steering, and the event includes the input of the actuator for steering.

In another example, the vehicle includes an accelerator pedal, and the sensor is to detect depression of the accelerator pedal, and the event includes acceleration of the vehicle.

In another example, the vehicle includes a brake pedal, and the sensor is to detect depression of the brake pedal, and the event includes deceleration of the vehicle.

An example non-transitory machine-readable storage medium includes instructions that, when executed, cause at least one processor circuit to: predict an event based on at least one of data gathered by or data generated by a sensor, the event to cause a change in at least one of motion or orientation of a chassis of a vehicle; determine a damping force to be applied by a damper to the chassis based on the event; and cause the damper to apply the damping force to the chassis.

In one example, the damper is a first damper, the damping force is a first damping force, and the instructions, when executed, cause the at least one processor circuit to: determine a second damping force to be applied by a second damper based on the event; and cause the second damper to apply the second damping force to the chassis, the second damping force symmetric to the first damping force.

In another example, the sensor is a GPS sensor and the event is a terrain feature.

In another example, the instructions, when executed, cause the at least one processor circuit to: identify a height of an implement coupled to the vehicle; and predict the event based on the height.

An example method to stabilize a vehicle chassis includes predicting an event that causes a change in at least one of motion or orientation of a chassis of a vehicle; determining a damping force to be applied by a damper coupled to the chassis based on the event; and causing the damper to apply the damping force to the chassis.

In one example, the damper is a first damper, the damping force is a first damping force, the first damper is coupled to a first location of the chassis, and the method includes: determining a second damping force to be applied by a second damper based on the event, the second damper coupled to a second location of the chassis; and causing the second damper to apply the second damping force at the second location of the chassis, the second damping force applied independent of the first damping force.

Example machine-readable storage includes machine-readable instructions, that when executed, implement a method or realize an apparatus as recited in any preceding example.

### BRIEF DESCRIPTION OF THE DRAWINGS

FIG. 1 illustrates an example agricultural sprayer including a tractor and a sprayer implement.
FIG. 2 illustrates an example tractor of the agricultural sprayer of FIG. 1 including an example suspension control system and without the sprayer implement shown.
FIG. 3 is a block diagram of an example implementation of suspension control circuitry of the suspension control system of FIG. 2.
FIG. 4 is a flowchart representative of example machine-readable instructions and/or example operations that may be executed, instantiated, and/or performed by example programmable circuitry to implement the suspension control circuitry of FIG. 3.
FIG. 5 is a block diagram of an example processing platform including programmable circuitry structured to execute, instantiate, and/or perform the example machine-readable instructions and/or perform the example operations of FIG. 4 to implement the suspension control circuitry of FIG. 3.
FIG. 6 is a block diagram of an example software/firmware/instructions distribution platform (e.g., one or more servers) to distribute software, instructions, and/or firmware (e.g., corresponding to the example machine-readable instructions of FIG. 4) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

Heavy equipment or work vehicles such as off-road vehicles, agricultural vehicles, construction vehicles, and road maintenance vehicles include suspension control to cushion or damp movement of the chassis of the vehicle. Example work vehicles include tractors, combine harvesters, forage harvesters, sugarcane harvesters, seed drills, field sprayers, loaders, telescopic handlers, backhoes, excavators, graders, feller bunchers, forwarders, log loaders, skidders, dump trucks, cranes, etc. Chassis movement can be caused by traversal of the vehicle across terrain (e.g., a field) and by operation of the work vehicle or an attachment or implement connected to the work vehicle. Example work vehicle implements include seeders, spreaders, round balers, sprayers, tillage, headers for combine harvesters, windrower headers, buckets, sweepers, rollers, blades, jackhammers, booms, etc.

A chassis of a work vehicle, such as an agricultural sprayer, experiences changes of mass at locations such as corners of the chassis, referred to herein as corner mass, during deployment, or unfolding, of a sprayer boom and with movement of a volume of liquid in a tank. The change in mass causes the chassis to rock or otherwise move. Excessive chassis movement can jostle or otherwise cause discomfort to an operator in a cab of the vehicle and may compromise performance of the work vehicle for its intended purpose. Operator discomfort and compromised vehicle performance can limit the duration for which the work vehicle is operated. Compromised vehicle performance can cause damage to the vehicle or the implement and/or negatively affect the performance of the implement such as spray quality.

Some vehicle chassis suspension controls mechanically adjust hydraulic cylinder pressures or air spring pressure to re-level the chassis and compensate for movement caused by changes to corner mass. However, known systems typically include a mechanical spring having a single acting spring rate or force curve. Examples disclosed herein improve known systems and can compensate for rapidly adjusting forces during in-field dynamic conditions to actively control unwanted chassis suspension dynamics and overall vehicle instability.

Examples disclosed herein actively and independently control suspension systems at different locations of a chassis of a work vehicle. For example, variable hydraulic damper components are actively controlled to apply a variable force on respective independent corner chassis suspension systems of a work vehicle such as an agricultural sprayer with boom platforms. Examples disclosed herein incorporate mechanical and/or hydraulic active damping components, sensors, programmable controllers, and logic to intelligently change the damping force of the dampers as a function of dynamic, in-field conditions and operating states of the work vehicle and/or implements connected to the work vehicle.

Examples disclosed herein enable a continuous and rapid change of damping force imparted on the chassis suspension system. The damping force can be optimized based on normal in-field conditions, fluctuating in-field conditions, and/or operating conditions that pose instability challenges for the work vehicle and implements connected to the work vehicle.

Examples disclosed herein employ prediction logic to identify or predict events that are likely to or known to cause a change in the motion and/or orientation of the chassis of the work vehicle and/or implements connected to the work vehicle. Vehicle control systems that use such logic are predictive in nature, instead of reaction based. Examples disclosed herein use feedforward sensing techniques to preemptively set the suspension of the chassis of the work vehicle to a target, desired, and/or optimized damping force at one or more locations (e.g., corners) of the chassis before the work vehicle experiences a dynamic reaction to the predicted event. For example, if the control system identifies or otherwise knows of an obstacle such as a bump in the terrain is approaching on the right side of the work vehicle, then the control system predicts an event that the chassis will dynamically react once the work vehicle encounters the bump. The control system sets a target suspension control state (i.e., target damping forces) at one or more locations of the chassis before the work vehicle encounters the bump to stabilize the chassis when the work vehicle traverses over the bump.

Examples disclosed herein control suspension to reduce in-cab accelerations of work vehicles and provide improved operator comfort and health. Improved operator comfort reduces operator fatigue, which enables increased daily operating hours. In the context of an agricultural sprayer, increased operating hours are particularly beneficial during peak, busy seasons when products are applied to fields.

Examples disclosed herein control suspension to increase work vehicle stability. Smoother chassis suspension dynamics improve overall vehicle ride characteristics and help stabilize vehicles. In the context of an agricultural sprayer, substantial sloshing of liquid can occur in the solution tank, which shakes the work vehicle. The example suspension controls systems disclosed herein mitigate the shaking.

Examples disclosed herein control suspension to aid control over implements. For example, considering an agricultural sprayer, improvements in control of the vehicle suspension decrease the likelihood that unwanted disturbances or other chassis movements are propagated to and affect the boom platform on the back end of the work vehicle. Thus, examples disclosed herein enhance control over boom height and increase boom height stability. A stable boom improves the effectiveness of an agricultural sprayer including, for example, at higher application speeds.

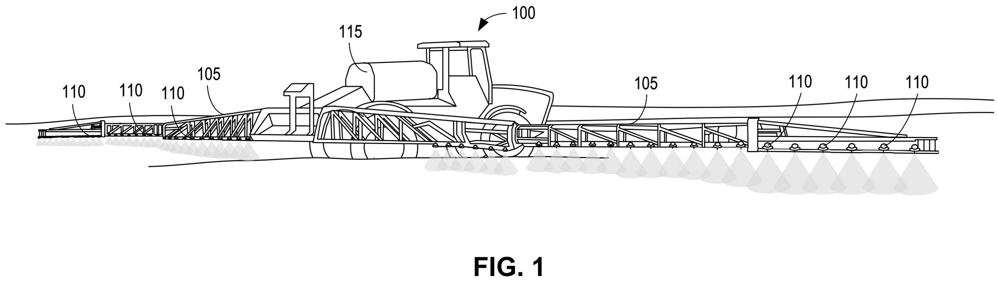

FIG. 1 illustrates an example vehicle 100 and example implement 105. In this example, the vehicle 100 is an agricultural sprayer. In this example, the implement 105 is a sprayer boom. Though an agricultural sprayer is illustrated in FIG. 1 and discussed throughout this disclosure, the suspension controls disclosed herein are applicable to all work vehicle types.

Agricultural sprayers are used to apply a spray of a liquid (e.g., fertilizer, fungicides, and/or other products) to a field using nozzles 110 mounted on the boom 105. The booms 105 on many agricultural sprayers 100 have dynamics of a flexible beam and are susceptible to vibration or other undesired movements.

To spray the liquid, the agricultural sprayer 100 includes a pump that pumps the liquid from a reservoir or tank 115 to the nozzles 110 mounted on the boom 105. The spray is controlled to deliver a target application to the agricultural field. For example, the liquid can be delivered to a particular dispersal area, such as directly on a crop or weed, in between plants, etc. The liquid can be delivered at a specified rate so that a target quantity of the liquid is applied to the dispersal area. Deviations from a prescribed application of the liquid can result in the liquid being applied to unintended areas and/or in incorrect amounts. For example, unevenly applied fertilizer is wasted in areas of over-application, and ineffective in areas of under-application.

In the illustrated example, the longitudinal axis of the boom 105 is perpendicular to the direction of travel of the agricultural sprayer 100 across the field. As the agricultural sprayer 100 traverses across the field, disturbances such as changes in wheel height due to ground level changes, impact with objects such as rocks, tree roots, etc., and/or wind can cause the boom 105 to vibrate. Boom vibration affects the boom position and orientation and adversely affects the spraying performance. Changes in boom position and orientation changes the vertical position of the nozzles 110, and the distance of the nozzles 110 to the dispersal area in the field. In addition, when turning the agricultural sprayer 100, centrifugal force can cause movement of the boom 105, and thus the nozzles 110 mounted on the boom 105. Changes in the chassis height and turning of the agricultural sprayer 100 can also cause sloshing of a volume of liquid in the tank 115. Sloshing liquid can also affect the boom position and orientation.

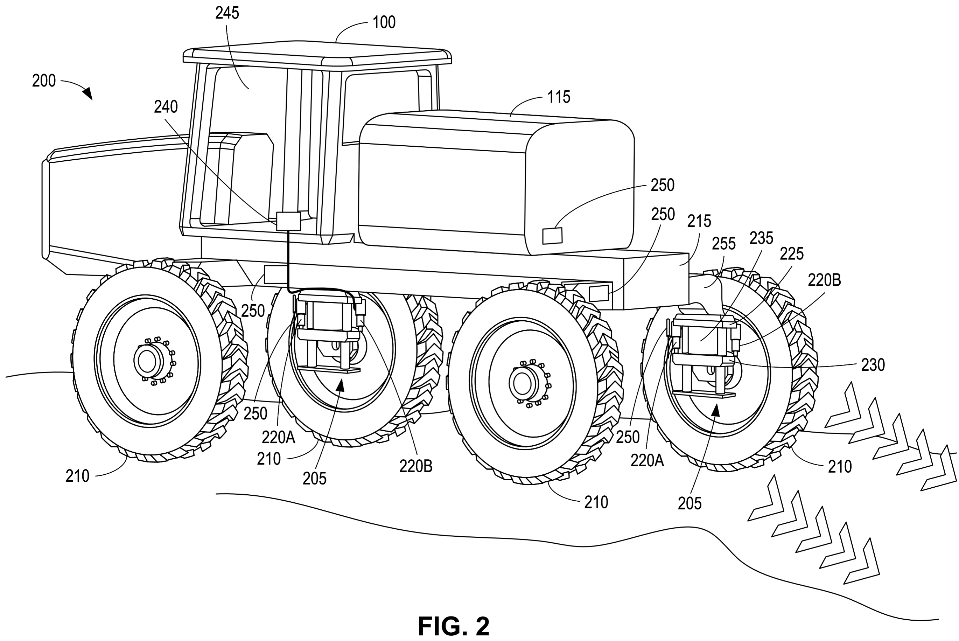

Suspension controls are used to mitigate vibration in the boom 105 and sloshing of liquid in the tank 115. FIG. 2 illustrates an example tractor or work vehicle 200 for the agricultural sprayer 100 of FIG. 1 with an example active suspension control system 205. The boom 105 is not shown in FIG. 2 for clarity. The work vehicle 200 has four wheels 210. In the illustrated example, there are elements of the active suspension control system 205 at each of the wheels 210, as described below. Thus, there are elements of the active suspension control system 205 at different locations (e.g., corners) of a chassis 215 of the work vehicle 200. Active suspension control systems are suspension and damping systems that cushion or damp movement between a first part (e.g., the chassis 215) and a second part (e.g., one or more wheels 210) of the work vehicle 200. The work vehicle 200 of the example of FIG. 2 has four wheels. The suspension controls disclosed herein may be used with vehicles with other drive forms including, for example, three wheeled vehicles, tracked systems, etc.

The active suspension control system 205 includes an example first active damper 220A and an example second active damper 220B. In some examples, the first active damper 220A and the second active damper 220B include a hydraulic damper. The first active damper 220A and the second active damper 220B are coupled between a sprung mass 225 (e.g., an axle knee coupled to the chassis 215) and an unsprung mass 230 (e.g., a wheel motor casting coupled to the wheel 210). In some examples, the active suspension control system 205 includes one of the first active damper 220A or the second active damper 220B. In some examples, the work vehicle 200 includes an example air spring 235. In the illustrated example, the air spring 235 is positioned between the first active damper 220A and the second active damper 220B. The air spring 235 is incorporated in a mechanical leveling valve system that assists in suspension control and stabilization of the chassis 215.

The work vehicle 200 includes an example electronic controller 240. In the illustrated example, the electronic controller 240 is positioned in a cab 245 of the work vehicle 200 for access by an operator. The electronic controller 240 can include input interfaces (e.g., keys, dials, buttons, switches, a touch screen, a microphone, etc.) for an operator to provide information and/or commands. The electronic controller 240 also includes an output interface (e.g., a display, speakers, etc.) to provide information to the operator. The electronic controller 240 is coupled to the first active damper 220 and the second active damper 220B. In some examples, the electronic controller 240 is part of the active suspension control system 205.

The work vehicle 200 includes a plurality of sensors 250 that are coupled to the electronic controller 240. Some of the sensors 250 may detect suspension displacement and/or a position and/or motion of the work vehicle 200 and/or the chassis 215 including velocity, linear acceleration, angular acceleration, levelness of the chassis, rotation, etc. The sensors 250 include inertial measurement unit (IMU) sensors. The work vehicle 200 can include sensors 250 to detect a liquid level in the tank 115 and a movement of a volume of liquid in the tank 115. Some sensors 250 detect a position of the boom 105 (folded, unfolded, partially unfolded, height, angle, etc.). Some sensors 250 detect torque on an axle, signals from a transmission control module, signals from a powertrain control module, signals from hydrostatic drive controls, depression of a brake pedal, or depression of an accelerator pedal. Some sensors 250 detect movement or input to an actuator for steering such as a joystick, a steering handle, or a steering wheel. Some sensors 250 detect wind speed and/or wind direction. Some sensors 250 include GPS sensors that detect latitude, longitude, and/or GPS coordinates of the work vehicle 200. Some sensors 250 include imaging sensors such as a camera to detect the environment around the work vehicle 200. Other imaging sensors include radar or lidar.

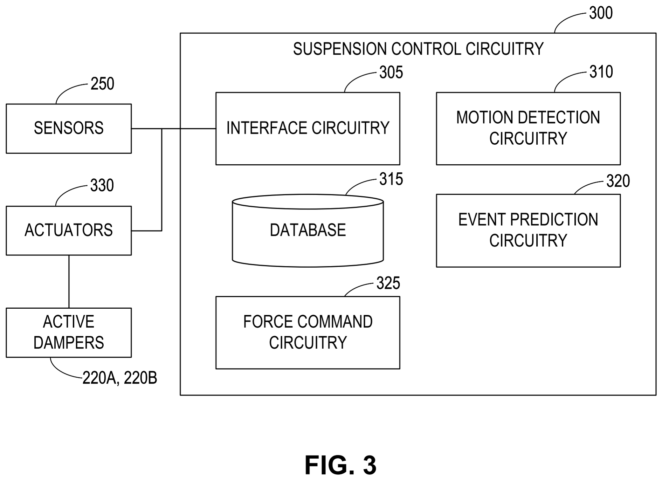

The active suspension control system 205 activates the first active damper 220A and the second active damper 220A to mitigate movement of the chassis 215 based on data gathered by, generated by, or otherwise provided by one or more of the sensors 250. FIG. 3 is a block diagram of an example implementation of suspension control circuitry 300 of the active suspension control system 205 of FIG. 2. The suspension control circuitry 300 is used to implement predictive chassis suspension control of the agricultural sprayer 100 to maximize vehicle stability and minimize boom excitation. The suspension control circuitry 300 can be implemented via the active suspension control system 205 (e.g., at the electronic controller 240).

The suspension control circuitry 300 includes example interface circuitry 305, example motion detection circuitry 310, an example database 315, example event prediction circuitry 320, and example force command circuitry 325.

The interface circuitry 305 obtains, accesses, or receives data gathered by or generated by the sensors 250. The suspension control circuitry 300 operates as a feedforward control system and uses the data gathered by or generated by the sensors 250 to predict an event, which is indicative of a change in the position, motion, and/or orientation of the chassis 215, the work vehicle 200, and/or an implement such as the boom 105. In some examples, an event indicates a possible unstable posture. When an event is predicted, the suspension control circuitry 300 controls the suspension of the chassis 215, the work vehicle 200, and/or the boom 105 to mitigate or minimize the effect of the event on the stability of the chassis 215, the work vehicle 200, and/or an implement such as the boom 105.

In some examples, an event may be predicted based on movement of the chassis 215. For example, the motion detection circuitry 310 may detect motion at a front end of the chassis 215. Based on the motion detection at the front end of the chassis 215 and the direction of travel of the work vehicle 200, the event prediction circuity 320 predicts motion at the rear end of the chassis 215 as the work vehicle 200 moves forward. For example, if the work vehicle 200 traverses over a bump, which is detected by an upward pitch of the front of the chassis 215, the event prediction circuitry 320 predicts that the rear of the chassis 215 will soon pitch upward as the rear wheels 210 traverse over the bump. Similarly, when the work vehicle 200 moves in reverse, motion detected at the rear end of the chassis 215 by the motion detection circuitry 310 may be used by the event prediction circuitry 320 to predict motion at the front end of the chassis 215.

Motion detected by the motion detection circuitry 310 on one side of the chassis 215 may be used by the event prediction circuitry 320 to predict lateral motion of the other side of the chassis 215. For example, when the motion detection circuitry 310 detects motion on a right side of the chassis 215, the event prediction circuitry 320 may predict motion of the left side of the chassis, and vice versa.

Motion detected by the motion detection circuitry 310 at one location of the chassis 215 may be used by the event prediction circuitry 320 to predict motion diagonally across the chassis 215. For example, when the motion detection circuitry 310 detects motion on a right, front corner of the chassis 215, the event prediction circuitry 320 may predict motion of the left, rear corner of the chassis, and vice versa. Similarly, when the motion detection circuitry 310 detects motion on a left, front corner of the chassis 215, the event prediction circuitry 320 may predict motion of the right, rear corner of the chassis 215, and vice versa.

In some examples, the event prediction circuitry 320 predicts an event based on movement of an implement such as the boom 105. For example, the boom 105 may include sensors that detect a height of the boom 105. The motion detection circuitry 310 identifies the activity (e.g., height) of the boom 105 based on the sensor data. The event prediction circuitry 320 predicts movement of the chassis 215 based on the movement (e.g., height) of the boom 105.

In some examples, the event prediction circuitry 320 predicts an event based on movement of liquid in the tank 115. For example, the sensors 250 may include a liquid level sensor that determines the level or position of liquid in the tank 115. The motion detection circuitry 310 may detect movement or sloshing of liquid in the tank 115 based on the data from the sensors 250. The event prediction circuitry 320 predicts movement of the chassis 215 based on the movement or sloshing of liquid in the tank 115.

In some examples, the event prediction circuitry 320 predicts an event based on human-induced vehicle dynamic changes (i.e., operator inputs) to the work vehicle 200. For example, the operator may move or otherwise input an instruction for an actuator for steering such as a steering handle, a steering wheel, or a joystick to steer a direction of the work vehicle 200. The sensors 250 can detect the input signal to the actuator for steering. The event prediction circuitry 320 determines the intended travel direction based on the input signal and predicts movement of the chassis 215 based on the intended travel direction. For example, the event prediction circuitry 320 predicts a change in the degree of roll of the chassis 215 and a change in the center of gravity of the work vehicle based on an input signal to turn the work vehicle 200.

In some examples, the operator input to the work vehicle 200 is an actuation or depression of an accelerator pedal. The sensors 250 can detect the depression of the accelerator pedal. The event prediction circuitry 320 predicts an acceleration event and movement of the chassis 215 based on the depression of the accelerator pedal. For example, the event prediction circuitry 320 predicts the chassis 215 will pitch upward and weight will be transferred to the rear wheels 210 based on the depression of the accelerator pedal.

In some examples, the operator input to the work vehicle 200 is an actuation or depression of a brake pedal. The sensors 250 can detect the depression of the brake pedal. The event prediction circuitry 320 predicts a deceleration event and movement of the chassis 215 based on the depression of the brake pedal. For example, the event prediction circuitry 320 predicts the chassis 215 will pitch downward and weight will be transferred to the front wheels 210 based on the depression of the brake pedal.

In some examples, the sensors 250 include imaging sensors such as a camera or other proximity-based distance sensors. In some examples, the sensors are mounted on a front end of the work vehicle 200. For example, the sensor 250 may be mounted to a front of the tank 115. In some examples, the sensor 250 may be mounted to a front axle 255. The sensor 250 gathers information related to the topography of the field ahead of the work vehicle 200. The topography information includes obstacles and terrain features (e.g., bumps, rocks, trenches, hills, water, etc.), and changes in terrain. The sensors 250 identify the proximity of the obstacle or terrain feature. The event prediction circuitry 320 predicts movement of the chassis 215 based on the topography information. For example, the event prediction circuitry 320 predicts that the chassis 215 will dynamically move when the work vehicle 200 encounters the obstacle.

In some examples, the topography information is based on a map. For example, the interface circuitry 305 download a map and store the map in the database 315. In some examples, the map includes terrain map data including digital elevation models. The sensors 250 can include GPS sensors that identify where the work vehicle 200 is on the map. GPS sensors can determine the latitude and longitude position of the work vehicle. The event prediction circuitry 320 pairs the position of the work vehicle 200 with the topography information from the map to predict events that could cause instability to the chassis 215.

The event prediction circuitry 320 may predict more than one event at the same time. For example, a work vehicle may brake and turn at the same time which could lead the event prediction circuitry 320 to predict multiple changes to the orientation and movement of the chassis 215.

The prediction of events is used to preemptively set and dynamically change damping forces at locations of the chassis 215 before the event is experienced by the work vehicle 200. Pre-set damping forces enable the work vehicle 200 to maintain stability as the event is experienced.

To effect damping forces to be applied to the chassis 215 during predictive suspension control, the force command circuity 325 identifies a damping force for application by the first active damper 220A and the second active damper 220B based on the predicted event. In some examples, the force command circuity 325 identifies the damping force based on multiple events. For example, the force command circuity 325 identifies a force to apply to one or more of the first active damper 220A or the second active damper 220B that is proportional to the motion to be experienced in the predicted event. For example, the greater the motion, the greater the damping force to mitigate the effects of the motion. The damping force is to change a height of the location of the chassis 215 associated with the motion. In some examples, the height of the location of the chassis 215 is changed relative to the wheel 210. Effectively, the damping force is identified to smooth the motion and/or level the chassis 215.

In some examples, the force command circuity 325 identifies different damping forces for different locations of the chassis 215. Different areas of the chassis 215 may experience different motion during the events, and different damping forces to counteract the motion and events are applied to the different locations. For example, the location of the chassis 215 near a pivot at which the boom 105 is deployed will experience different motion than a location distal to the pivot. In another example, a front of the chassis 215 experiences different motion than a rear of the chassis 215 during sudden deceleration. In some examples, the force command circuity 325 identifies damping forces for different locations of the chassis 215 independently. In other words, force command circuity 325, in some examples, identifies a damping force at a first corner or other location of the chassis 215 without regard to the damping force identified for a second corner or other location of the chassis 215.

The identified damping forces are included a command signal that the suspension control circuitry 300 communicates via the interface circuitry 305 to one or more actuators 330. The actuators effect the command signal by causing one or more of the first active damper 220A and the second active damper 220B to apply the identified damping force to the associated location of the chassis 215. In examples with hydraulic dampers, the actuators 330 may change a position of a valve in one or more of the active dampers 220A, 220B to control a rate of fluid flowing through a piston in the active damper 220A, 220B. In some examples, the first active damper 220A and the second active damper 220B are orientated such that one extends while the other compresses. In such examples, the damping force identified by the force command circuity 325 is to extend one of the active dampers 220A, 220B while compressing the other of the active dampers 220B, 220A. In other words, the actuators 330 cause extension of one of the active dampers 220A, 200B and compression of the other one of the active dampers 220B, 220A based on the force command. In some examples, the actuators 330 the active dampers 220B, 220A to apply symmetric damping forces.

In some examples, the suspension control circuitry 300 controls other aspects of the work vehicle 200 based on the predicted events in addition to or alternative to control of the active dampers for stability of the chassis 215. For example, the predicted events may be used to control the implements (e.g., boom height).

FIG. 3 is a block diagram of an example implementation of the suspension control circuitry 300 to do implement predictive suspension control of the chassis 215 of the work vehicle 200. The suspension control circuitry 300 of FIG. 3 may be instantiated (e.g., creating an instance of, bring into being for any length of time, materialize, implement, etc.) by programmable circuitry. For example, programmable circuitry may be implemented by a Central Processor Unit (CPU) executing first instructions, a field programmable gate array, a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), etc. Additionally or alternatively, the suspension control circuitry 300 of FIG. 3 may be instantiated (e.g., creating an instance of, bring into being for any length of time, materialize, implement, etc.) by (i) an Application Specific Integrated Circuit (ASIC) and/or (ii) a Field Programmable Gate Array (FPGA) (e.g., another form of programmable circuitry) structured and/or configured in response to execution of second instructions to perform operations corresponding to the first instructions. It should be understood that some or all of the circuitry of FIG. 3 may, thus, be instantiated at the same or different times. Some or all of the circuitry of FIG. 3 may be instantiated, for example, in one or more threads executing concurrently on hardware and/or in series on hardware. Moreover, in some examples, some or all of the circuitry of FIG. 3 may be implemented by microprocessor circuitry executing instructions and/or FPGA circuitry performing operations to implement one or more virtual machines and/or containers.

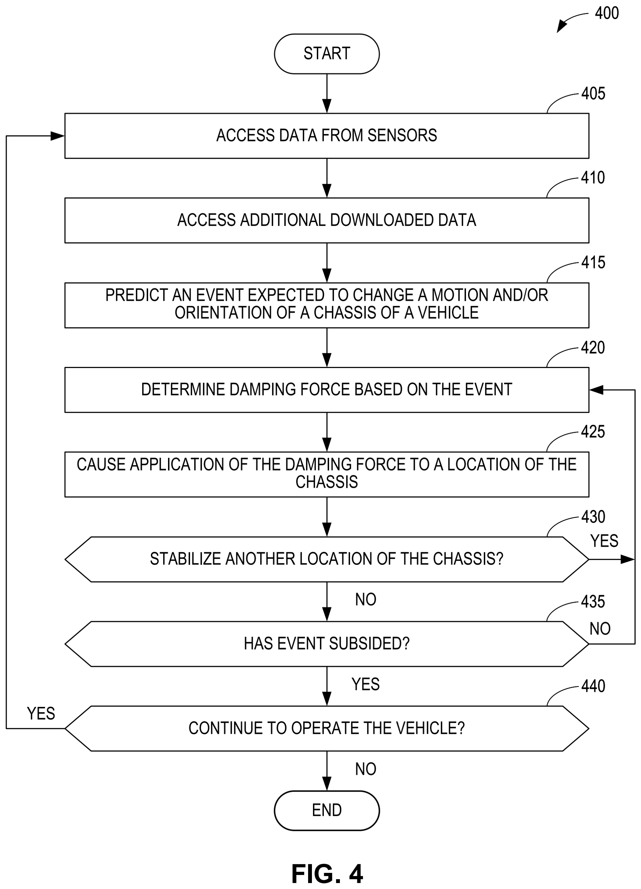

In some examples, the suspension control circuitry 300 is instantiated by programmable circuitry executing suspension control instructions and/or configured to perform operations such as those represented by the flowchart(s) of FIG. 4.

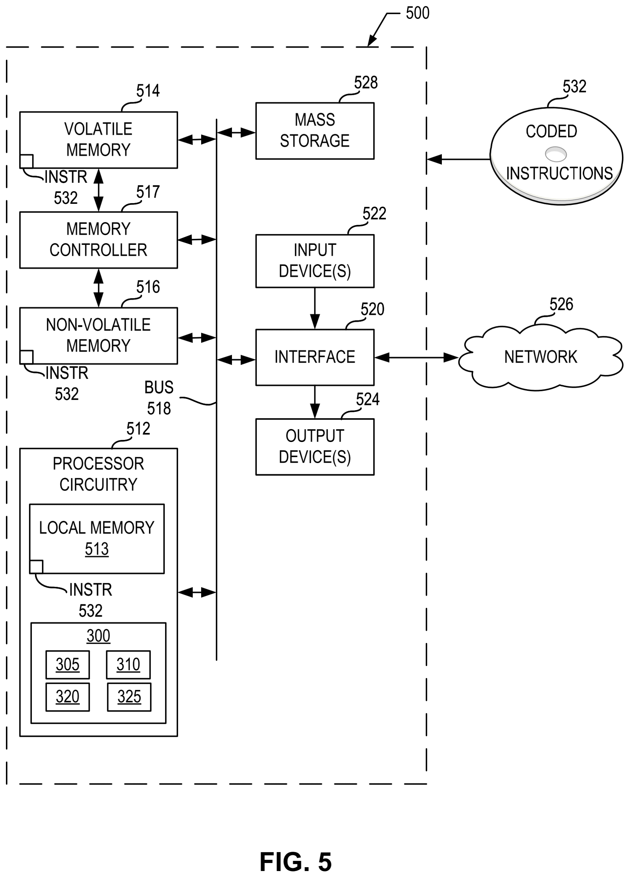

In some examples, the suspension control circuitry 300 includes means for controlling suspension of a vehicle. In some examples, the suspension control circuitry 300 may be instantiated by programmable circuitry such as the example programmable circuitry 512 of FIG. 5. For instance, the suspension control circuitry 300 may be instantiated by the example microprocessor executing machine executable instructions such as those implemented by the operations of FIG. 4. In some examples, the suspension control circuitry 300 may be instantiated by hardware logic circuitry, which may be implemented by an ASIC, XPU, or the FPGA circuitry configured and/or structured to perform operations corresponding to the machine-readable instructions. Additionally or alternatively, the suspension control circuitry 300 may be instantiated by any other combination of hardware, software, and/or firmware. For example, the suspension control circuitry 300 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

While an example manner of implementing the suspension control circuitry 300 is illustrated in FIG. 3, one or more of the elements, processes, and/or devices illustrated in FIG. 3 may be combined, divided, re-arranged, omitted, eliminated, and/or implemented in any other way. Further, the example interface circuitry 305, the example motion detection circuitry 310, the example database 315, the example event prediction circuitry 320, the example force command circuitry 325 and/or more generally, the suspension control circuitry 300 of FIG. 3, may be implemented by hardware alone or by hardware in combination with software and/or firmware. Thus, for example, any of the example interface circuitry 305, the example motion detection circuitry 310, the example database 315, the example event prediction circuitry 320, the example force command circuitry 325 and/or more generally, the suspension control circuitry 300, could be implemented by programmable circuitry, processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), vision processing units (VPUs), and/or field programmable logic device(s) (FPLD(s)) such as FPGAs in combination with machine readable instructions (e.g., firmware or software). Further still, the example suspension control circuitry 300 of FIG. 3 may include one or more elements, processes, and/or devices in addition to, or instead of, those illustrated in FIG. 3, and/or may include more than one of any or all of the illustrated elements, processes and devices.

Flowchart(s) representative of example machine-readable instructions, which may be executed by programmable circuitry to implement and/or instantiate the suspension control circuitry 300 of FIG. 3 and/or representative of example operations which may be performed by programmable circuitry to implement and/or instantiate the suspension control circuitry 300 of FIG. 3, are shown in FIG. 4. The machine-readable instructions may be one or more executable programs or portion(s) of one or more executable programs for execution by programmable circuitry such as the programmable circuitry 512 shown in the example processor platform 500 discussed below in connection with FIG. 5 and/or may be one or more function(s) or portion(s) of functions to be performed by the example programmable circuitry (e.g., an FPGA). In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIG. 4, many other methods of implementing the example suspension control circuitry 300 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). As used herein, programmable circuitry includes any type(s) of circuitry that may be programmed to perform a desired function such as, for example, a CPU, a GPU, a VPU, and/or an FPGA. The programmable circuitry may include one or more CPUs, one or more GPUs, one or more VPUs, and/or one or more FPGAs located in the same package (e.g., the same integrated circuit (IC) package or in two or more separate housings), one or more CPUs, GPUs, VPUs, and/or one or more FPGAs in a single machine, multiple CPUs, GPUs, VPUs, and/or FPGAs distributed across multiple servers of a server rack, and/or multiple CPUs, GPUs, VPUs, and/or FPGAs distributed across one or more server racks. Additionally or alternatively, programmable circuitry may include a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), etc., and/or any combination(s) thereof in any of the contexts explained above.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine-readable instructions may be fragmented and stored on one or more storage devices, disks and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine-readable, computer readable and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C-sharp, Perl, Python, JavaScript, HyperText Markup Language (HTML), Structured Query Language (SQL), Swift, etc.

As mentioned above, the example operations of FIG. 4 may be implemented using executable instructions (e.g., computer readable and/or machine-readable instructions) stored on one or more non-transitory computer readable and/or machine-readable media. As used herein, the terms non-transitory computer readable medium, non-transitory computer readable storage medium, non-transitory machine-readable medium, and/or non-transitory machine-readable storage medium are expressly defined to include any type of computer readable storage device and/or storage disk and to exclude propagating signals and to exclude transmission media. Examples of such non-transitory computer readable medium, non-transitory computer readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine-readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine-readable instructions, etc., and/or manufactured to execute computer-readable instructions, machine-readable instructions, etc.

FIG. 4 is a flowchart representative of example machine-readable instructions and/or example operations 400 that may be executed, instantiated, and/or performed by programmable circuitry for predictive suspension control of work vehicles. The example machine-readable instructions and/or the example operations 400 of FIG. 4 include the interface circuitry 305 access data from the sensors 250 (block 405). In some examples, the interface circuitry 305 also accesses additional downloaded data (block 410). For example, topographical information related to a field may be downloaded in the database 315 of the work vehicle 200. The event prediction circuitry 320 predicts an event expected to change a motion and/or orientation of the chassis 215 of the work vehicle 200 based on the data from the sensors (block 415). In some examples, the data downloaded in the database 315 supplements the data from the sensors 250 in the event prediction performed by the event prediction circuitry 320.

The force command circuitry 325 determines the damping force based on the event (block 420). The suspension control circuitry 300 communicates with the actuators 330 via the interface circuitry 305 to effect the damping force based on the event. The actuators 330 cause application of the damping force (via the active dampers 220A, 220B) to a location of the chassis (block 425).

The suspension control circuitry 300 determines if another location of the chassis is to be stabilized based on predicted events (block 430). If or when the suspension control circuitry 300 determines that another location of the chassis is to be stabilized (block 430: YES), the example operations 400 continue with the force command circuitry 325 determining the damping force based on the event (block 420). If or when the suspension control circuitry 300 determines there is not another location of the chassis is to be stabilized based on predicted events (block 430: NO), the suspension control circuitry 300 determines of the event has subsided (block 435).

If or when the suspension control circuitry 300 determines that the event has not subsided (block 435: NO), the example operations 400 continue with the force command circuitry 325 determining the damping force based on the event (block 420). If or when the suspension control circuitry 300 determines that the event has subsided (block 435: YES), the suspension control circuitry 300 determines if the work vehicle 200 is to continue to operate (block 440).

As disclosed herein, the order of the operation of the instructions in the process 400 of FIG. 4 may be rearranged. For example, the event prediction circuitry 320 can independently predict events at different locations of the chassis 215, and the event prediction circuitry 320 can simultaneously monitor events at different locations of the chassis 215. Thus, the order of the instructions in the blocks of the process 400 of FIG. 4 does not mandate that the event prediction circuitry 320 and the suspension control circuitry 300, in general, operate in a particular sequence such as illustrated in FIG. 4. For example, the suspension control circuitry 300 may assess if an event has subsided (block 435) prior to determining if there is another location of the chassis to stabilize (block 430).

If or when the suspension control circuitry 300 determines that the work vehicle 200 is to continue to operate (block 440: YES), the example operations 400 continue with the interface circuitry 305 accessing data from the sensors (block 405) for further event prediction. If or when the suspension control circuitry 300 determines that the work vehicle 200 is not to continue to operate (block 440: NO), the example operations 400 end.

FIG. 5 is a block diagram of an example programmable circuitry platform 500 structured to execute and/or instantiate the example machine-readable instructions and/or the example operations of FIG. 4 to implement the suspension control circuitry 300 of FIG. 3. The programmable circuitry platform 500 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, or any other type of computing and/or electronic device.

The programmable circuitry platform 500 of the illustrated example includes programmable circuitry 512. The programmable circuitry 512 of the illustrated example is hardware. For example, the programmable circuitry 512 can be implemented by one or more integrated circuits, logic circuits, FPGAs, microprocessors, CPUs, GPUs, VPUs, DSPs, and/or microcontrollers from any desired family or manufacturer. The programmable circuitry 512 may be implemented by one or more semiconductor based (e.g., silicon based) devices. In this example, the programmable circuitry 512 implements the suspension control circuitry 300, the interface circuitry 305, the motion detection circuitry 310, the event prediction circuitry 320, and the force command circuitry 325.

The programmable circuitry 512 of the illustrated example includes a local memory 513 (e.g., a cache, registers, etc.). The programmable circuitry 512 of the illustrated example is in communication with main memory 514, 516, which includes a volatile memory 514 and a non-volatile memory 516, by a bus 518. The volatile memory 514 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 516 may be implemented by flash memory and/or any other desired type of memory device. Access to the main memory 514, 516 of the illustrated example is controlled by a memory controller 517. In some examples, the memory controller 517 may be implemented by one or more integrated circuits, logic circuits, microcontrollers from any desired family or manufacturer, or any other type of circuitry to manage the flow of data going to and from the main memory 514, 516.

The programmable circuitry platform 500 of the illustrated example also includes interface circuitry 520. The interface circuitry 520 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCle) interface.

In the illustrated example, one or more input devices 522 are connected to the interface circuitry 520. The input device(s) 522 permit(s) a user (e.g., a human user, a machine user, etc.) to enter data and/or commands into the programmable circuitry 512. The input device(s) 522 can be implemented by, for example, an audio sensor, a microphone, a camera (still or video), a keyboard, a button, a mouse, a touchscreen, a trackpad, a trackball, an isopoint device, and/or a voice recognition system.

One or more output devices 524 are also connected to the interface circuitry 520 of the illustrated example. The output device(s) 524 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 520 of the illustrated example, thus, typically includes a graphics driver card, a graphics driver chip, and/or graphics processor circuitry such as a GPU.

The interface circuitry 520 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 526. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 500 of the illustrated example also includes one or more mass storage discs or devices 528 to store firmware, software, and/or data. Examples of such mass storage discs or devices 528 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 532, which may be implemented by the machine-readable instructions of FIG. 4, may be stored in the mass storage device 528, in the volatile memory 514, in the non-volatile memory 516, and/or on at least one non-transitory computer readable storage medium such as a CD or DVD which may be removable.

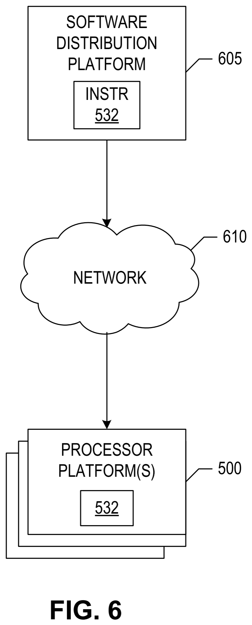

A block diagram illustrating an example software distribution platform 605 to distribute software such as the example machine-readable instructions 532 of FIG. 5 to other hardware devices (e.g., hardware devices owned and/or operated by third parties from the owner and/or operator of the software distribution platform) is illustrated in FIG. 6. The example software distribution platform 605 may be implemented by any computer server, data facility, cloud service, etc., capable of storing and transmitting software to other computing devices. The third parties may be customers of the entity owning and/or operating the software distribution platform 605. For example, the entity that owns and/or operates the software distribution platform 605 may be a developer, a seller, and/or a licensor of software such as the example machine-readable instructions 532 of FIG. 5. The third parties may be consumers, users, retailers, OEMs, etc., who purchase and/or license the software for use and/or re-sale and/or sub-licensing. In the illustrated example, the software distribution platform 605 includes one or more servers and one or more storage devices. The storage devices store the machine-readable instructions 532, which may correspond to the example machine-readable instructions of FIG. 4, as described above. The one or more servers of the example software distribution platform 605 are in communication with an example network 610, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine-readable instructions 532 from the software distribution platform 605. For example, the software, which may correspond to the example machine-readable instructions of FIG. 4, may be downloaded to the example programmable circuitry platform 500, which is to execute the machine-readable instructions 532 to implement the suspension control circuitry 300. In some examples, one or more servers of the software distribution platform 605 periodically offer, transmit, and/or force updates to the software (e.g., the example machine-readable instructions 532 of FIG. 5) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is openended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real-world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein, integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that actively control suspensions in work vehicles such as agricultural sprayers. Disclosed systems, apparatus, articles of manufacture, and methods improve the operation of such work vehicles and implements. Examples disclosed intelligently predict events that may change a stability posture of a work vehicle or its implements and dynamically and preemptively change the damping force at different areas of the based on the predictions. The use of predictive suspension control increases vehicle and implement stability and operation and operator comfort.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

Embodiments of the invention can be described with reference to the following numbered clauses, with preferred features laid out in dependent clauses:
1. A vehicle comprising:
   a chassis;
   a damper;
   a sensor;
   machine-readable instructions; and
   programmable circuitry configured to execute the machine-readable instructions to:
      predict an event, the event to cause a change in at least one of motion or orientation of the chassis;
      determine a damping force to be applied by the damper based on the event; and
      cause the damper to apply the damping force to the chassis.
2. The vehicle of clause 1, wherein the programmable circuitry is to execute the machine-readable instructions to predict the event based on at least one of data gathered by or data generated by the sensor.
3. The vehicle of clause 1 or clause 2, wherein the programmable circuitry is to execute the machine-readable instructions to predict the event based on topography information.
4. The vehicle of clause 3, wherein the topography information is based on a map.
5. The vehicle of any preceding clause, wherein the event is a movement of a front of the chassis, and the damper is positioned at a rear of the chassis.
6. The vehicle of any preceding clause, wherein the damper is a first damper, the damping force is a first damping force, the vehicle further including a second damper, and wherein the programmable circuitry is to execute the machine-readable instructions to:
   determine a second damping force to be applied by the second damper based on the event; and
   cause the second damper to apply the second damping force to chassis.
7. The vehicle of clause 6, wherein the second damping force applied independent of the first damping force.
8. The vehicle of clause 6 or clause 7, wherein the first damper is positioned at a front of the vehicle and the second damper is positioned at a rear of the vehicle.
9. The vehicle of any preceding clause, wherein the sensor includes a camera, and the event includes at least one of an obstacle or a terrain feature.
10. The vehicle of any preceding clause, the vehicle further including a tank with a volume of a liquid, and wherein the sensor includes a liquid level sensor, and the event includes a sloshing of the volume of liquid.
11. The vehicle of any preceding clause, the vehicle further including a boom, wherein the sensor is to detect a position of the boom, and the event includes the position of the boom.
12. The vehicle of any preceding clause, the vehicle further including an actuator for steering, wherein the sensor is to detect input of the actuator for steering, and the event includes the input of the actuator for steering.
13. The vehicle of any preceding clause, the vehicle further including an accelerator pedal, wherein the sensor is to detect depression of the accelerator pedal, and the event includes acceleration of the vehicle.
14. The vehicle of any preceding clause, the vehicle further including a brake pedal, wherein the sensor is to detect depression of the brake pedal, and the event includes deceleration of the vehicle.
15. A non-transitory machine-readable storage medium comprising instructions that, when executed, cause at least one processor circuit to:
   predict an event based on at least one of data gathered by or data generated by a sensor, the event to cause a change in at least one of motion or orientation of a chassis of a vehicle;
   determine a damping force to be applied by a damper to the chassis based on the event; and
   cause the damper to apply the damping force to the chassis.
16. The non-transitory machine-readable medium of clause 15, wherein the damper is a first damper, the damping force is a first damping force, and wherein the instructions, when executed, cause the at least one processor circuit to:
   determine a second damping force to be applied by a second damper based on the event; and
   cause the second damper to apply the second damping force to the chassis, the second damping force symmetric to the first damping force.
17. The at least one non-transitory machine-readable medium of clause 15 or clause 16, wherein the sensor is a GPS sensor and the event is a terrain feature.
18. The at least one non-transitory machine-readable medium of any one of clauses 15 to 17, wherein the instructions, when executed, cause the at least one processor circuit to:
   identify a height of an implement coupled to the vehicle; and
   predict the event based on the height.
19. A method to stabilize a vehicle chassis, the method comprising:
   predicting an event that causes a change in at least one of motion or orientation of a chassis of a vehicle;
   determining a damping force to be applied by a damper coupled to the chassis based on the event; and
   causing the damper to apply the damping force to the chassis.
20. The method of clause 19, wherein the damper is a first damper, the damping force is a first damping force, the first damper is coupled to a first location of the chassis, and the method includes:
   determining a second damping force to be applied by a second damper based on the event, the second damper coupled to a second location of the chassis; and
   causing the second damper to apply the second damping force at the second location of the chassis, the second damping force applied independent of the first damping force.

## Claims

1. A vehicle (100, 200) comprising:
a chassis (215);
a damper (220A, 22B);
a sensor (250);
machine-readable instructions (400, 532); and
programmable circuitry (300, 512) configured to execute the machine-readable instructions to:
predict an event, the event to cause a change in at least one of motion or orientation of the chassis;
determine a damping force to be applied by the damper based on the event; and
cause the damper to apply the damping force to the chassis.

2. The vehicle of claim 1, wherein the programmable circuitry is to execute the machine-readable instructions to predict the event based on at least one of data gathered by or data generated by the sensor.

3. The vehicle of any of claims 1 or 2, wherein the programmable circuitry is to execute the machine-readable instructions to predict the event based on topography information.

4. The vehicle of claim 3, wherein the topography information is based on a map.

5. The vehicle of any of claims 1 to 4, wherein the event is a movement of a front of the chassis, and the damper is positioned at a rear of the chassis.

6. The vehicle of any of claims 1 to 5, wherein the damper is a first damper, the damping force is a first damping force, the vehicle further including a second damper (220A, 200B), and wherein the programmable circuitry is to execute the machine-readable instructions to:
determine a second damping force to be applied by the second damper based on the event; and
cause the second damper to apply the second damping force to chassis.

7. The vehicle of claim 6, wherein the second damping force applied independent of the first damping force.

8. The vehicle of any of claims 6 or 7, wherein the first damper is positioned at a front of the vehicle and the second damper is positioned at a rear of the vehicle.

9. The vehicle of any of claims 1 to 8, wherein the sensor includes a camera, and the event includes at least one of an obstacle or a terrain feature.

10. The vehicle of any of claims 1 to 9, the vehicle further including a tank (115) with a volume of a liquid, and wherein the sensor includes a liquid level sensor, and the event includes a sloshing of the volume of liquid.

11. The vehicle of any of claims 1 to 10, the vehicle further including a boom (105), wherein the sensor is to detect a position of the boom, and the event includes the position of the boom.

12. The vehicle of any of claims 1 to 11, the vehicle further including an actuator for steering, wherein the sensor is to detect input of the actuator for steering, and the event includes the input of the actuator for steering.

13. The vehicle of any of claims 1 to 12, the vehicle further including an accelerator pedal, wherein the sensor is to detect depression of the accelerator pedal, and the event includes acceleration of the vehicle.

14. The vehicle of any of claims 1 to 13, the vehicle further including a brake pedal, wherein the sensor is to detect depression of the brake pedal, and the event includes deceleration of the vehicle.

15. A non-transitory machine-readable storage medium (500) comprising instructions (400, 532) that, when executed, cause at least one processor circuit (300, 512) to implement or realize the programmable circuitry of any preceding claim.
